# EUROPEAN PATENT APPLICATION

(11) **EP 2 610 944 A1**
(43) Date of publication of application: **03.07.2013**
(21) Application number: 12738925.2
(22) Date of filing: 27.01.2012
(51) Int. Cl.: H01M 2/10

(54) **ELECTRICITY STORAGE SYSTEM**

(30) Priority: 28.01.2011 JP 2011016491
(71) Applicant: Sanyo Electric Co., Ltd., Osaka 570-8677 (JP)
(72) Inventor: SARUHASHI Koichi, Osaka 570-8677 (JP)
(74) Representative: Klunker . Schmitt-Nilson . Hirsch
(86) International application number: PCT/JP2012/051829
(87) International publication number: WO 2012/102383

(57) **Abstract**

The present invention provides an electric storage system having a structure capable of easily mounting a submersion-prevention vessel incorporating a cell module in a housing case. The present invention provides an electric storage system comprising a top-opened box-shaped submersion-prevention vessel accommodating a cell module including a plurality of battery cells and a mounting base for mounting the submersion-prevention vessel by inserting the vessel from a front side to a rear side, wherein a protruding portion is provided in a lower portion of at least one outer wall surface of the submersion-prevention vessel; a fixing member for fixing the protruding portion is provided on the rear side of a top surface of the mounting base for mounting the submersion-prevention vessel; and a guide member that is formed so as to gradually expand in width toward a side opposite to a direction of slidably moving when mounting the submersion-prevention vessel and that positions the submersion-prevention vessel is provided on both end portions of the fixing member.

## Description

### CROSS-REFERENCE TO RELATED APPLICATION

The present application is a continuation application of International Application No. PCT/JP2012/051829, filed January 27, 2012, the entire contents of which are incorporated herein by reference and priority to which is hereby claimed. The PCT/JP2012/051829 application claimed the benefit of the date of the earlier filed Japanese Patent Application No. 2011-016491 filed January 28, 2011, the entire contents of which are incorporated herein by reference, and priority to which is hereby claimed.

### TECHNICAL FIELD

The present invention relates to an electric storage system having a structure for mounting a submersion-prevention vessel incorporating a cell module in a housing case.

### BACKGROUND ART

Conventional practice has been to connect an electric storage system incorporating a cell module including a rechargeable lithium-ion battery or the like between systems of a commercial power supply and each load, and to use this electric storage system as a backup power supply in case of a power failure of a communication system, a computer system, or the like. In recent years, it has also been conventional to store electric power generated by a distributed power supply greatly varying in generation amount such as a large-scale solar cell, wind power generator, wave power generator, or the like in an electric storage system and then invert and supply the power to a commercial power supply. With such a system, by supplying power to meet a peak of power consumption for each load, not only can the usage of power by the commercial power supply be leveled but also surplus power can be supplied to an external power supply.

Such a system is disclosed, for example, in the following Patent Document 1 as an invention of an uninterruptible power supply. The uninterruptible power supply disclosed in the following Patent Document 1 includes a housing that is divided into a control chamber in an upper portion and a power supply chamber in a lower portion by a partition wall arranged horizontally at a center portion in the vertical direction thereof, and includes a configuration in which the power supply chamber provided in the lower portion of the housing incorporates a battery pack unit, and the control chamber in the upper portion includes a power supply control unit for controlling the battery pack unit, a charging circuit, an inverter circuit, and the like.

In addition, the following Patent Document 2 discloses an invention of a compact and inexpensive standby type uninterruptible power supply. The uninterruptible power supply disclosed in the following Patent Document 2 includes a transformer that transforms a commercial power supply voltage, a storage battery for storing electric power, and an inverter that converts power of the storage battery into AC power at power outage, and the transformer; the storage battery, and the inverter are located in the device casing. The standby type uninterruptible power supply is configured such that the storage battery is placed on a floor surface of the device casing; a board having a plurality of switching elements forming the inverter is placed on an upper portion of the storage battery; and the transformer is placed on an upper portion of the board.

### CITATION LIST

### PATENT DOCUMENTS

PTL 1: JP No. 2004-022317A
PTL 2: JP No. 2000-184752A

### SUMMARY OF INVENTION

### TECHNICAL PROBLEM

Such systems as exemplified by the above Patent Documents 1 and 2 are required to reduce the overall system size so as to be accommodated in a limited space, as they are spread. Further, the systems are often installed outdoors from the viewpoint of convenience of installation space. In consideration of the natural environment such as an exposure to rainwater, a measure of placing the cell module in a water resistant vessel such as a submersion-prevention vessel needs to be taken.

Unfortunately, the cell module for use in the electric storage system is heavy, and the submersion-prevention vessel incorporating the cell module is very heavy and hard to move. Thus, it is difficult to align the fixing screw holes on the rear side of the submersion-prevention vessel when the submersion-prevention vessel is mounted in the storage case or the like of the electric storage system. The reason for this is that the more compact the electric storage system, the less the work space provided for the worker, and thus the more remarkable this problem becomes. Such problems also occur in the systems disclosed in the above Patent Documents 1 and 2, but measures required for solving the problems are not disclosed in the above Patent Documents 1 and 2.

In view of this, the inventors conducted various studies for the purpose of effectively mounting the submersion-prevention vessel incorporating the cell module in the storage case, and as a result, have found that by providing a protruding portion on an outer wall of the submersion-prevention vessel and by fitting and coupling the protruding portion and a fixing member provided on a mounting base in a bottom portion of the storage case by slidably moving the submersion-prevention vessel, the submersion-prevention vessel can be fixed using only a front side bolt without using a rear side bolt; and further, by forming a guide member for guiding the protruding portion in both end portions of the fixing member, the protruding portion can move along the guide member and the submersion-prevention vessel can be smoothly coupled to the fixing member, which has led to the completion of the present invention.

Specifically, an advantage of the present invention is to provide an electric storage system enabling a submersion-prevention vessel to be easily positioned and fixed by providing a guide member in a fixing member for fixing the submersion-prevention vessel in a storage case thereof.

### SOLUTION TO PROBLEM

In order to solve the above problems, an electric storage system of a first aspect of the present invention is an electric storage system including
a top-opened box-shaped submersion-prevention vessel accommodating a cell module including a plurality of battery cells and
a mounting base for mounting the submersion-prevention vessel by inserting the vessel from a front side to a rear side, wherein
a protruding portion is provided in a lower portion of at least one outer wall surface of the submersion-prevention vessel;
a fixing member for fixing the protruding portion is provided on the rear side of a top surface of the mounting base for mounting the submersion-prevention vessel; and
a guide member that is formed so as to gradually expand in width toward the front side from the rear side of mounting the submersion-prevention vessel and that positions the submersion-prevention vessel is provided on both end portions of the fixing member.

In addition, an electric storage system of a second aspect is such that in the electric storage system of the first aspect,
the mounting base is provided in a storage case.

In addition, an electric storage system of a third aspect is such that in the electric storage system of the first aspect,
the protruding portion is formed to include both end portions of a surface on which the protruding portion of at least the submersion-prevention vessel is formed.

In addition, an electric storage system of a fourth aspect is such that in the electric storage system of the first or third aspect,
the protruding portion is made of a hollow angular member.

In addition, an electric storage system of a fifth aspect is such that in the electric storage system of any one of the first to fourth aspects,
the fixing member is a box-shaped body having a space large enough to accommodate the protruding portion; a side of inserting the protruding portion is opened; and the mounting base serves as a bottom surface thereof.

In addition, an electric storage system of a sixth aspect is such that in the electric storage system of the first aspect,
the submersion-prevention vessel includes at least one fixture parallel to the mounting base in a lower portion of an outer wall surface on a side opposite a side of the fixing member;
the fixture includes at least one through-hole;
the mounting base includes a fixing hole formed in a position corresponding to the through-hole when the submersion-prevention vessel is placed in a predetermined position; and
the through-hole is coupled to the fixing hole by means of a coupling member.

In addition, an electric storage system of a seventh aspect is such that in the electric storage system of the fifth aspect,
the coupling member can be a member capable of coupling by screwing.

In addition, an electric storage system of an eighth aspect is such that in the electric storage system of the fifth or seventh aspect,
a leg portion of a predetermined height is provided on an underside of the mounting base.

In addition, an electric storage system of a ninth aspect is such that in the electric storage system of the first or sixth aspect,
the submersion-prevention vessel includes a plurality of triangular-plate-shaped guiding members having a predetermined thickness provided along an inner wall of the submersion-prevention vessel.

### ADVANTAGEOUS EFFECTS OF INVENTION

In conventional submersion-prevention vessels incorporating a cell module, the submersion-prevention vessel is placed in a predetermined position of a mounting base and is then fixed to a predetermined position of the mounting base by means of a screw or the like. Unfortunately, since the submersion-prevention vessel incorporates the cell module, the submersion-prevention vessel is very heavy and hard to move, and thus difficulty is encountered in aligning the screw holes, and the like. In view of this, the electric storage system of the first aspect of the present invention is configured such that the submersion-prevention vessel is slidably moved from the front side to the rear side on the mounting base, and a protruding portion formed in the submersion-prevention vessel is coupled to a fixing member formed on the mounting base by fitting them to each other. Thus, the submersion-prevention vessel can be fixed without using a screw or the like. Further, both end portions of the fixing member formed on the mounting base include a guide member for positioning the submersion-prevention vessel. Thus, when the protruding portion of the submersion-prevention vessel is moved toward the fixing member on the mounting base, even if a positional relationship to the fixing member is shifted, the protruding portion can be moved along the guide member by pushing in the submersion-prevention vessel as is when the protruding portion contacts the guide member. As a result, the protruding portion can be fitted and coupled to the fixing member without being shifted. Accordingly, the electric storage system of the first aspect of the present invention can mount a heavy submersion-prevention vessel on the mounting base in an effective and simple manner. Note that the electric storage system according to the present invention may incorporate not only the cell module but also various control circuits and the like.

When the mounting base is placed in the storage case, even if there is a high voltage portion in the electric storage system, the high voltage portion can be arranged so as not to be exposed at use, thereby ensuring excellent safety, which reduces space. Thus, it is more difficult to access the rear side on which the submersion-prevention vessel is placed and it is difficult for a worker to work. According to the electric storage system of the second aspect, even if it is difficult to access the rear side on which the submersion-prevention vessel is placed, the protruding portion formed in the submersion-prevention vessel can be coupled to the fixing member formed on the mounting base by fitting them to each other simply by slidably moving the submersion-prevention vessel on the mounting base. Thus, the effect of the first aspect of the present invention is more remarkably exhibited.

According to the electric storage system of the third aspect, the protruding portion is formed to include both end portions of a surface on which the protruding portion of at least the submersion-prevention vessel is formed, and the mounting base includes the fixing member formed so as to correspond to the protruding portion. If the protruding portion is formed to fit the width of the submersion-prevention vessel, the entire width of the submersion-prevention vessel can be fixed. Thereby, the submersion-prevention layer can be securely fixed to the mounting base. If the protruding portion is formed only in both end portions of the submersion-prevention vessel, it is possible not only to reduce the weight but also to reduce the manufacturing cost while the above effect is exhibited.

According to the electric storage system of the fourth aspect, the protruding portion is made of a hollow angular member, and thus can be formed to be lightweight and can be manufactured at low cost with reduced materials. Since it is made of an angular member, fixing can be performed in a stable and reliable manner.

According to the electric storage system of the fifth aspect, the protruding portion of the submersion-prevention vessel is fixed such that all portions except the portion connected to the submersion-prevention vessel are fixed by the mounting base and the fixing member, and thus it can be more reliably fixed. In addition, the upper surface of the protruding portion is also fixed by the fixing member, and thus the movement in the vertical direction of the submersion-prevention vessel can also be regulated. For example, it can withstand vibrations in the vertical direction due to an earthquake or the like.

According to the electric storage system of the sixth aspect, in order to fix the submersion-prevention vessel to the mounting base, on the rear side, they are coupled to each other by inserting the protruding portion into the fixing member; and on the opposite side; namely, on the front side, a through-hole formed in a fixture formed in the submersion-prevention vessel can be coupled to a fixing hole formed in the mounting base by means of a coupling member. Thus, according to the electric storage system of the sixth aspect, it is easy to fix on the front side. In addition, the mounting base is coupled to the submersion-prevention vessel on both sides; namely, on the rear side and the front side of the storage case, thereby increasing the coupling strength between them.

According to the electric storage system of the fifth aspect, the submersion-prevention vessel can be fixed to the mounting base by means of screws, bolts, or the like, and thus fixing them is simple and easy.

According to the electric storage system of the eighth aspect, a leg portion is provided on an underside of the mounting base, and the mounting base is away from the ground, which provides a work space for coupling a coupling member such as a bolt and a nut, thus facilitating the work.

According to the electric storage system of the ninth aspect, when a cell module is placed in a predetermined position of the submersion-prevention vessel, the cell module can be easily placed in the predetermined position by causing a guiding member to guide the cell module.

### BRIEF DESCRIPTION OF THE DRAWINGS

[FIG. 1] FIG. 1 is a perspective view of a state in which a front plate member of an electric storage system according to an embodiment is removed.
[FIG. 2] FIG. 2 is a perspective view of a state in which front, rear, left, right, and upper plate members of a storage case of the electric storage system according to the embodiment are removed.
[FIGS. 3] FIG. 3A is a perspective view of a mounting base; FIG. 3B is an enlarged view of the portion IIIB of FIG. 3A; and FIG. 3C is an enlarged view of the portion IIIC of FIG. 3A.
[FIGS. 4] FIG. 4A is a front perspective view of a submersion-prevention vessel; FIG. 4B is a rear perspective view thereof; and FIG. 4C is a perspective view illustrating a variation of a protruding portion formed in the submersion-prevention vessel.
[FIGS. 5] FIG. 5A is a perspective view illustrating a state in which the submersion-prevention vessel incorporating a battery pack is placed on the mounting base; and FIG. 5B is a perspective view illustrating a state in which the submersion-prevention vessel is moved to a predetermined position of the mounting base.
[FIGS. 6] Each of FIGS. 6A to 6F is a schematic view illustrating a state in which the submersion-prevention vessel is mounted in a predetermined position of the mounting base.

### DESCRIPTION OF EMBODIMENTS

Hereinafter, the mode for carrying out the present invention will be described in detail with reference to an embodiment and the drawings. Note that the following embodiment describes an example of the electric storage system for embodying the technical ideas of the present invention and is not intended to limit the present invention thereto. The present invention can be applied equally to other embodiments falling within the scope of the claims. Note also that the description will focus on a case in which a power conditioner is used as an AC-DC conversion device.

### [Embodiment]

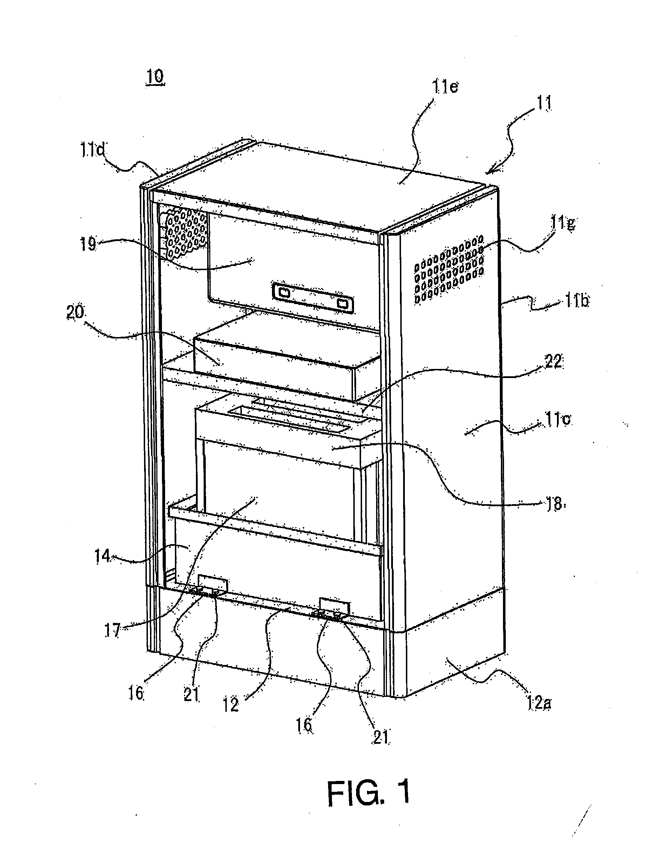

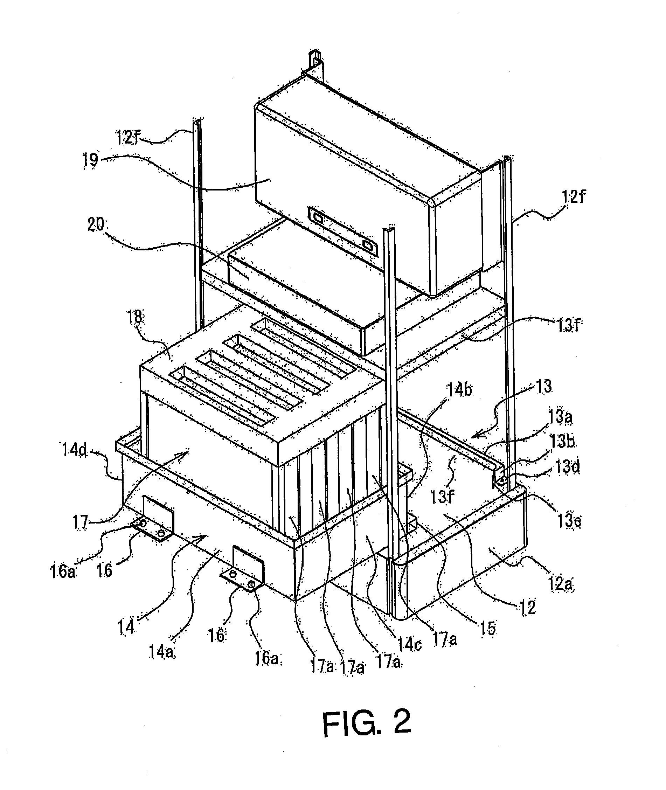

With reference to FIGS. 1 to 6, the configuration of the electric storage system according to the present embodiment will be described. As illustrated in FIGS. 1 and 2, an electric storage system 10 of the present embodiment includes a power conditioner 19, a control unit 20, a battery pack 17 integrally incorporating a plurality of cell modules 17a covered by a cover body 18, and a submersion-prevention vessel 14 incorporating the battery pack 17, all of which are housed in a storage case 11. For example, the electric storage system 10 is connected between a commercial power supply supplied to households and a load of a household appliance or the like and can be used as a backup power supply during a power outage or as an auxiliary power supply, and further can also be used to supply excess power to a commercial power supply. Note that in a case in which a home distributed power supply such as a solar cell system or a micro wind generator is provided in each home, the home distributed power supply may also be connected to the electric storage system 10.

Hereinafter, each component of the electric storage system 10 of the present embodiment will be described. As illustrated in FIGS. 1 to 3, the storage case 11 includes a rectangular mounting base 12 having a predetermined thickness provided in a bottom portion having a predetermined height; a front plate member (unillustrated) formed in a plate-shaped body having a predetermined area and mounted on a periphery of the mounting base 12; a rear plate member 11b; side plate members 11c and 11d; and a top plate member 11e mounted on the uppermost portion of these. Note that for convenience of description, FIG. 1 does not illustrate the front plate member.

Note also that the mounting base 12 of the present embodiment includes a leg portion 12a having a predetermined height so as to suppress water such as rainwater from flowing into the storage case 11. In addition, the periphery of the mounting base 12 includes a groove (unillustrated) for mounting the front plate member, the rear plate member 11b, and both side plate members 11c and 11d of the storage case 11. Further, the four corners of the mounting base 12 each include a pillar body 12f for placing the top plate member 11e.

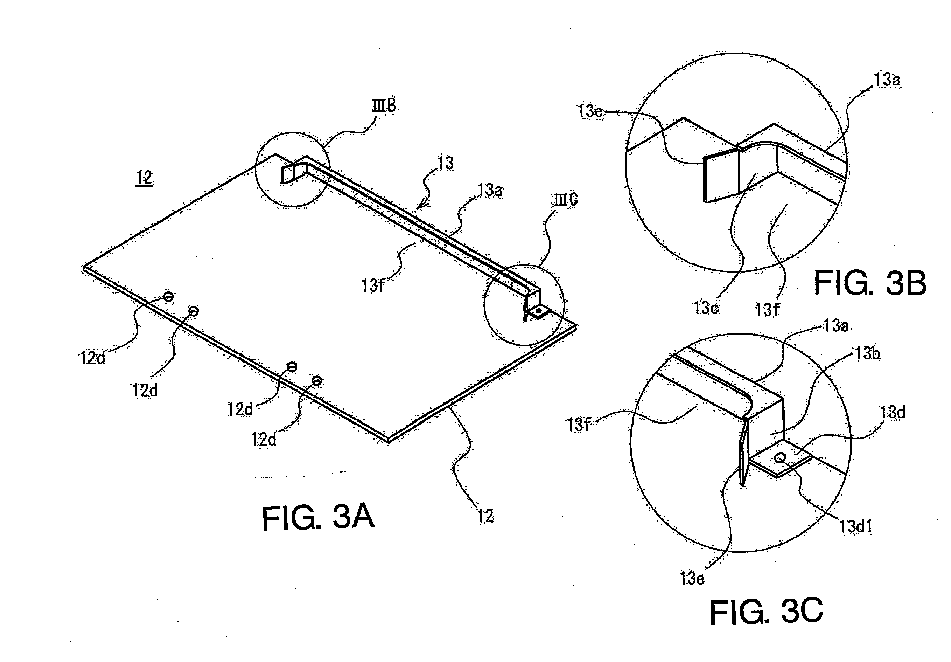

As illustrated in FIG. 3, a fixing member 13 is provided on a surface of the mounting base 12 on a side of mounting the rear plate member 11b of the storage case 11. The fixing member 13 is used to position and fix the submersion-prevention vessel 14 when the submersion-prevention vessel 14 is mounted on the mounting base 12 as described later. The fixing member 13 includes a fixing portion 13a made of a pillar-shaped body having a predetermined length and an L-shaped cross-section, with both ends being covered by a rectangular plate body, into which a protruding portion 15 formed in the submersion-prevention vessel 14 is inserted as described later; a fixing piece 13d extending from both side wall portions 13b and 13c of the fixing portion 13a and fixing the fixing member 13 to the mounting base 12 by means of screws and the like; and a guide member 13e extending from both side wall portions 13b and 13c of the fixing portion 13a.

The fixing member 13 is mounted such that when the fixing portion 13a is fixed on the mounting base 12, an opening 13f is provided on the front plate member side of the storage case 11. A hole 13d1 is provided at a portion contacting the mounting base 12 of both fixing pieces 13d and 13d. The fixing member 13 is fixed to the mounting base 12 by inserting a screw or the like into the hole 13d1. In addition, the guide member 13e is provided so as to be formed in both side wall portions 13b and 13c on a side in which the opening 13f is opened, to be made of a plate-shaped body having substantially the same height as both side wall portions 13b and 13c, and to gradually expand in the width between both guide members 13e and 13e toward a side of mounting the front plate member of the storage case 11 from the width of both side wall portions 13b and 13c of the fixing member 13.

In addition, fixing holes 12b for fixing the submersion-prevention vessel 14 by means of a coupling member 21 such as a screw and the like are formed, two for each of two places, in the mounting base 12 on a side of mounting the front plate member of the storage case 11. Note that the number of fixing holes will be described later.

Each of the front plate member and the rear plate member 11b of the storage case 11 is a vertical rectangular plate body and occupies the largest area. In addition, each of the side plate members 11c and 11d of the storage case 11 is a narrow rectangular plate body and includes a plurality of ventilation holes 11g therein. The top plate member 11e of the storage case 11 is a rectangular plate body with the perimeter having the same length as the length of the front plate member and the rear plate member 11b and having substantially the same length as the width of both side plate members 11c and 11d, and is placed so as to cover the upper portion of the storage case 11.

In addition, a shelf 22 is provided parallel to the mounting base 12 in an upper side of the mounting base 12 in the storage case 11 of the present embodiment. Note that in the present embodiment, one shelf is illustrated, but without being limited to this, a plurality of shelves may be provided.

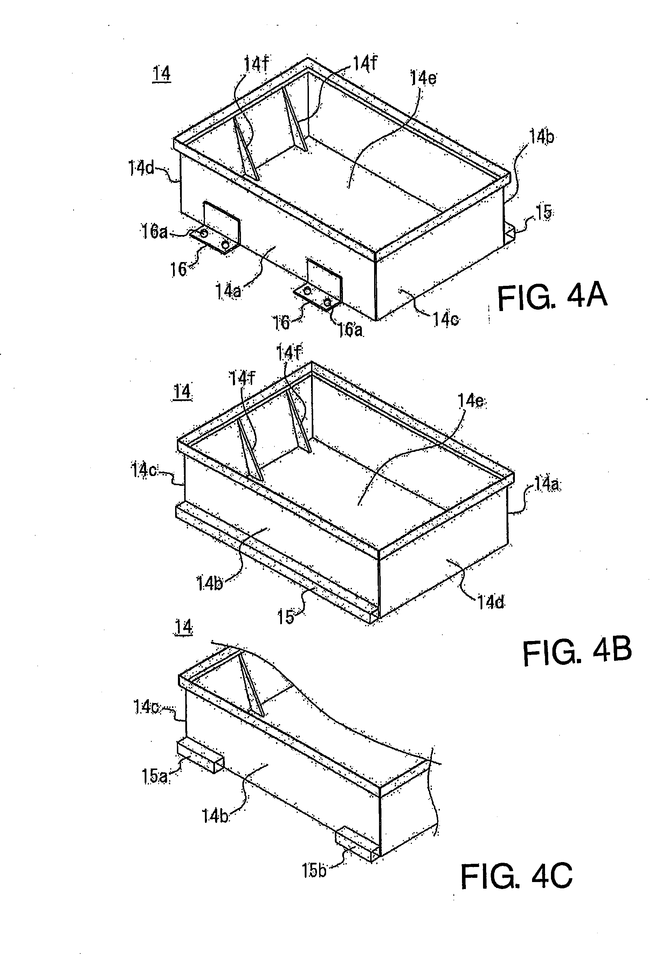

As illustrated in FIGS. 2 and 4, the submersion-prevention vessel 14 is opened upward and includes a rectangular bottom portion 14e large enough to accommodate the battery pack 17 therein; a front portion 14a standing at a predetermined height from the four sides of the bottom portion 14e; a rear portion 14b, and left and right side portions 14c and 14d so as to prevent water from flowing into the interior thereof until the water level exceeds a predetermined height of both side portions 14a to 14d. In addition, guiding members 14f to be described are provided, two for each, facing each other, inside the submersion-prevention vessel 14.

In addition, two fixtures 16 for fixing the mounting base 12 are provided at a lower portion outside the front portion 14a of the submersion-prevention vessel 14. Each of the fixtures 16 includes two through-holes 16a at a portion parallel to the mounting base 12. Note that the number of fixtures 16 is not limited to two, but may be one, or three or more; and the number of through-holes 16a formed in the fixture 16 may be one, or three or more. Note also that the number of fixing holes 12b formed in the mounting base 12 as described above corresponds to the number of fixtures 16 and the through-holes 16a formed therein.

Further, the protruding portion 15 is formed at a lower portion outside the rear portion 14b of the submersion-prevention vessel 14. The protruding portion 15 is coupled to the fixing member 13 provided on the mounting base 12 so as to position and fix the submersion-prevention vessel 14. The protruding portion 15 has substantially the same length as the width of the rear portion 14b of the submersion-prevention vessel 14 and is made of a hollow cylindrical body having a rectangular cross-section. The protruding portion 15 is made of a hollow angular member, and thus can be formed to be lightweight and can be manufactured at low cost with reduced materials. In addition, the protruding portion 15 is formed large enough to be fitted in an opening 13f of the fixing portion 13a of the fixing member 13. Note that the protruding portion 15 illustrated in FIG. 4B may be such that protruding portions 15a and 15b are provided on both ends of the lower portion outside the rear portion 14b of the submersion-prevention vessel 14 as illustrated in FIG. 4C. By doing so, the protruding portion 15a and 15b can be manufactured at lower cost and can be formed to be of lighter weight.

As illustrated in FIG. 2, the battery pack 17 integrates a plurality of cell modules 17a by covering it with a cover body 18 so as to supply a stored charge to a load. As illustrated in FIGS. 3 and 4, the cell module 17a is formed in a thin parallelepiped shape so as to incorporate a plurality of battery cells arranged in an array. The battery pack 17 includes a plurality of cell modules 17a arranged in an array and is formed in a parallelepiped shape by covering it with a cover body 18. The interior of the cover body 18 is wired so as to connect each cell module 17a in parallel or in series so that a plurality of cell modules 17a can be operated integrally. Note that in a case in which each cell module 17a includes a communication circuit, the cover body 18 may include a communication interface for connecting the communication circuit of the cell module 17a to the control unit 20.

The power conditioner 19 converts power between DC and AC such as to convert AC current of a commercial power supply to DC current for charging each cell module 17a, or conversely to convert the DC current charged in the cell module 17a to AC current usable by a household appliance or the like. As illustrated in FIGS. 1 and 2, the power conditioner 19 of the present embodiment is formed in a parallelepiped shape having an outer wall made of a steel plate or the like and is mounted at an upper portion of the pillar body 12f of the storage case 11. Note that the power conditioner 19 is publicly known, and thus detailed description of the internal configuration will be omitted. Note also that AC/DC converter is not limited to the power conditioner 19, but a publicly known inverter or the like may be used, so long as AC/DC conversion can be provided.

The control unit 20 is configured to control the power conditioner 19 such as to charge the battery pack 17 from a commercial power supply or an external power supply and to supply power charged in the battery pack 17 to a load or the commercial power supply, and further to control the voltage inside the battery pack 17, and the like. As illustrated in FIGS. 1 and 2, the control unit 20 of the present embodiment is formed in a low, thin parallelepiped shape and is placed on the shelf 22 of the storage case 11.

Hereinafter, with reference to FIGS. 1, 5, and 6, mounting of the submersion-prevention vessel on the mounting base will be described.

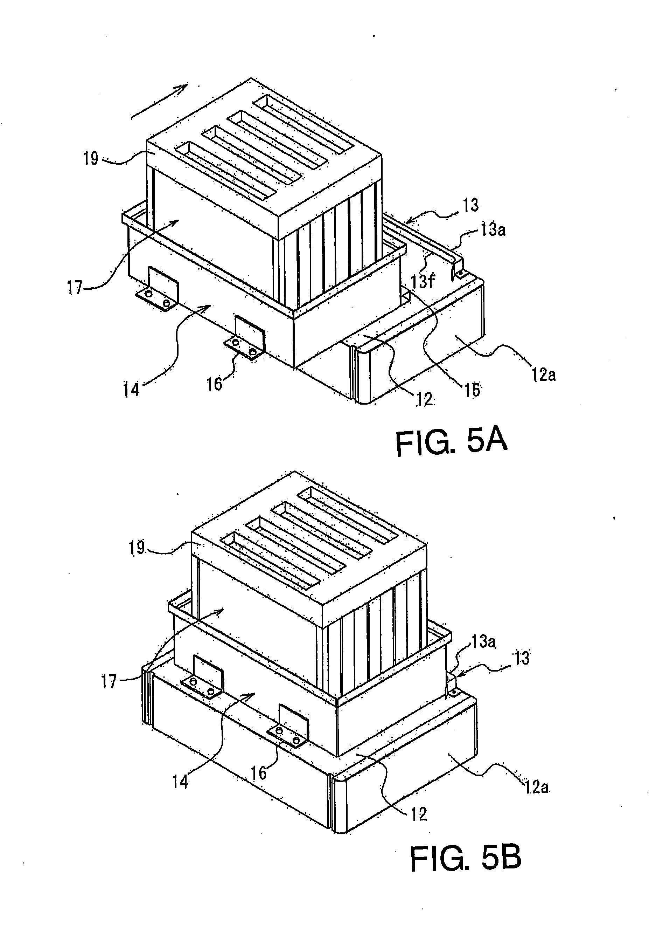

First, as illustrated in FIG. 5A, the battery pack 17 is placed inside the submersion-prevention vessel 14. An inner wall of the submersion-prevention vessel 14 includes a plurality of guiding members 14f formed in a triangular plate-like body having a predetermined thickness for guiding so as to arrange the battery pack 17 in a predetermined position. The guiding member 14f is formed to be the widest at a portion contacting the bottom portion 14e of the submersion-prevention vessel 14 and to extend at an acute angle upward. Since the guiding member 14f is provided, the guiding member 14f can guide the heavy battery pack 17 and thus the battery pack 17 can be easily placed at a predetermined position. When the battery pack is placed in the submersion-prevention vessel, as illustrated in FIG. 5A, the submersion-prevention vessel 14 is placed on the mounting base 12. Note that the guiding member 14f is illustrated as a triangular plate-like body, but is not limited to this shape. For example, a trapezoidal shape may be considered, so long as the guiding member 14f is formed to be the widest at a portion contacting the bottom portion 14e of the submersion-prevention vessel 14 and to extend at an acute angle upward.

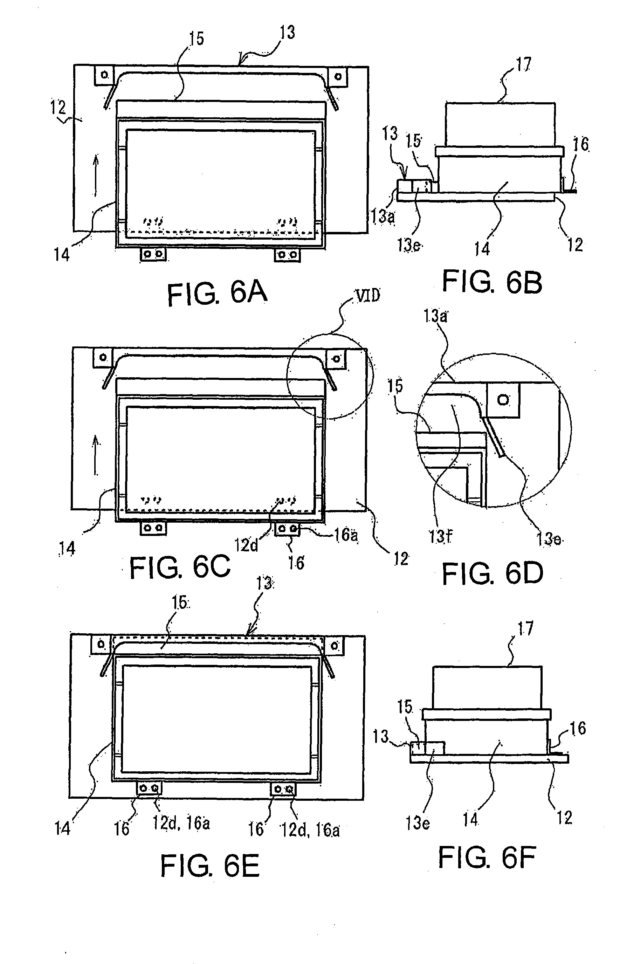

Then, the submersion-prevention vessel 14 incorporating the battery pack 17 is fixed to the mounting base 12. By the fixing method, first, the submersion-prevention vessel 14 is arranged on the mounting base such that the protruding portion 15 formed in the rear portion 14b of the submersion-prevention vessel 14 faces the fixing member 13 formed on the mounting base 12. Then, the submersion-prevention vessel 14 is pushed in to move toward a predetermined position of the mounting base 12 by sliding on the mounting base 12 (see FIGS. 6A and 6B).

When the submersion-prevention vessel 14 is moved, then, as illustrated in FIG. 6C, the fixing member 13 may move closer to the protruding portion 15 with a slight shift. However, even if an attempt is made to adjust the shift, the submersion-prevention vessel 14 is very heavy, and thus making a fine adjustment is difficult. If the storage case 11 is made compact, there may be no space for accessing the fixing member 13 and the protruding portion 15.

At this time, as illustrated in FIGS. 6C and 6D, both ends of the fixing member 13 include a guide member 13e. Even if the submersion-prevention vessel 14 has a shift, by further pushing in the submersion-prevention vessel 14, both ends of the protruding portion 15 move along the guide member 13e to be positioned at the opening 13f of the fixing member 13. By further pushing in the submersion-prevention vessel 14, the protruding portion 15 can be fitted in the fixing member 13 (see FIGS. 5B, 6E, and 6F).

This fitting enables the protruding portion 15 provided in the submersion-prevention vessel 14 to be fixed such that all portions except the portion connected to the submersion-prevention vessel 14 are fixed by the mounting base 12 and the fixing member 13, and the upper side of the protruding portion 15 is also fixed. Thus, the movements not only in the horizontal direction but also in the vertical direction of the submersion-prevention vessel 14 can be regulated. For example, it can withstand vibrations in the vertical direction due to an earthquake or the like. Note that the protruding portion 15 is formed by the width (the width of the rear portion 14b according to the present embodiment) of a surface for fixing the submersion-prevention vessel 14 (see FIG. 3B); the fixing member 13 is formed on the mounting base 12 by the width corresponding to the width of the protruding portion 15 (see FIG. 4A); and thus, the entire width of the submersion-prevention vessel 14 can be fixed to the mounting base 12, thereby ensuring reliable fixing.

Then, the fixture 16 provided in the front portion 14a of the submersion-prevention vessel 14 is fixed to the fixing hole 12b formed on the mounting base 12 by means of the coupling member 21 such as a screw (see FIGS. 1 and 6E). By doing so, the front side can be easily fixed, and the mounting base 12 is coupled to the submersion-prevention vessel 14 on the rear side and both sides of the front of the storage case 11, thereby increasing the coupling strength between them. In addition, the use of a screw, a bolt, or the like as the coupling member 21 enables the submersion-prevention vessel to be more easily fixed to the mounting base. Further, the leg portion 12a is provided on an underside of the mounting base 12, and the mounting base is away from the ground, which, for example, facilitates the work of attaching bolts, nuts, and the like.

Thus, fixing of the submersion-prevention vessel to the mounting base is completed.

**REFERENCE SYMBOL LIST**

| | |
|---|---|
| 10 | electric storage system |
| 11 | storage case |
| 12 | mounting base |
| 12b | fixing hole |
| 13 | fixing member |
| 13a | fixing portion |
| 13d | fixing piece |
| 13e | guide member |
| 13f | opening |
| 14 | submersion-prevention vessel |
| 14f | guiding member |
| 14a | front portion |
| 14b | rear portion |
| 14e | bottom portion |
| 15, 15b, 15c | protruding portion |
| 16 | fixture |
| 17 | battery pack |
| 17a | cell module |
| 18 | cover body |
| 19 | power conditioner |
| 20 | control unit |
| 21 | coupling member |

## Claims

1. An electric storage system comprising:
a top-opened box-shaped submersion-prevention vessel accommodating a cell module including a plurality of battery cells and
a mounting base for mounting the submersion-prevention vessel by inserting the vessel from a front side to a rear side, wherein
a protruding portion is provided in a lower portion of at least one outer wall surface of the submersion-prevention vessel;
a fixing member for fixing the protruding portion is provided on the rear side of a top surface of the mounting base for mounting the submersion-prevention vessel; and
a guide member that is formed so as to gradually expand in width toward a side opposite to a direction of slidably moving when mounting the submersion-prevention vessel and that positions the submersion-prevention vessel is provided on both end portions of the fixing member.

2. The electric storage system according to claim 1, wherein
the mounting base is provided in a storage case.

3. The electric storage system according to claim 1, wherein
the protruding portion is formed to include both end portions of a surface on which the protruding portion of at least the submersion-prevention vessel is formed.

4. The electric storage system of the submersion-prevention vessel according to claim 1 or 3, wherein
the protruding portion is made of a hollow angular member.

5. The electric storage system according to any one of claims 1 to 4, wherein
the fixing member is a box-shaped body having a space large enough to accommodate the protruding portion; a side of inserting the protruding portion is opened; and
the mounting base serves as a bottom surface thereof.

6. The electric storage system according to claim 1, wherein
the submersion-prevention vessel includes at least one fixture parallel to the mounting base in a lower portion of an outer wall surface on a side opposite a side of the fixing member;
the fixture includes at least one through-hole;
the mounting base includes a fixing hole formed in a position corresponding to the through-hole when the submersion-prevention vessel is placed in a predetermined position; and
the through-hole is coupled to the fixing hole by means of a coupling member.

7. The electric storage system according to claim 5, wherein
the coupling member can be a member capable of coupling by screwing.

8. The electric storage system according to claim 1, 5, or 7, wherein
a leg portion with a predetermined height is provided on an underside of the mounting base.

9. The electric storage system according to claim 1 or 6, wherein
the submersion-prevention vessel includes a plurality of triangular plate-shaped guiding members having a predetermined thickness provided along an inner wall of the submersion-prevention vessel.
